(19) Europäisches Patentamt
European Patent Office
Office européen des brevets

(11) **EP 2 257 112 A1**

(12) **EUROPEAN PATENT APPLICATION**

(43) Date of publication:
**01.12.2010 Bulletin 2010/48**

(51) Int Cl.:
*H04W 72/04* (2009.01)      *H04W 74/04* (2009.01)

(21) Application number: **09305499.7**

(22) Date of filing: **29.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Thomson Licensing, Inc.**
**92100 Boulogne-Billancourt (FR)**

(72) Inventors:
• **Zhang, Zhi Gang**
  **92648, BOULOGNE cedex (FR)**

• **Cheng, Lin Xiang**
  **92648, BOULOGNE cedex (FR)**
• **Wang, Xian Lei**
  **92648, BOULOGNE cedex (FR)**

(74) Representative: **Ruellan-Lemonnier, Brigitte**
**Technicolor**
**1-5 rue Jeanne d'Arc**
**92130 Issy-les-Moulineaux (FR)**

(54) **Time slot allocation method in communication system**

(57)     A time slot allocation method in a Time Division Multiple Access communication system is provided. An access point in the communication system broadcasts time slot allocation message to n associated stations STA1 to STA n. The time slot allocation message includes the initial time of the time slot allocation, allocated time slot number of STA1, sum of time slot number of STA1 and STA2, sum of time slot number of STA1 to STA3, ..., and sum of time slot number from STA1 to STA n. Upon receipt of the above information, each station can efficiently obtain the starting time and duration of the allocated time for communication.

| 1st | 2nd | | | nth | (n+1)th |
|---|---|---|---|---|---|
| initial time | allocated time slot numbers of STA1 | sum of time slot numbers of STA1+STA2 | ...... | sum of time slot numbers of STA1+STA2+ …+STA(n-1) | sum of time slot numbers of STA1+STA2+ …+STAn |

Fig.3

EP 2 257 112 A1

**Description**

FIELD OF THE INVENTION

The present invention relates generally to the field of communication, and more particularly, to a time slot allocation method in a Time Division Multiple Access (TDMA) communication system.

BACKGROUND OF THE INVENTION

Communication systems are known to support wireless or wired communication. Generally, a communication system includes a plurality of communication units that transmit and receive information over communication resources and a controller that allocates the communication resources to the communication units.

In a TDMA communication system, it is an important task for a controller to efficiently allocate time slots (one important kind of communication resources) to the communication units.

SUMMARY OF THE INVENTION

According to one aspect of the invention, a time slot allocation method of a TDMA communication system is provided. The TDMA communication system comprises a plurality of communication units numbered from 1 to n (n $\geq$ 2) and a controller for allocating a number of time slots for communication to each of the communication units. The method comprises, at the level of the controller, the steps of: transmitting a time slot allocation message to the plurality of communication units, the message comprising in sequence the following n+1 items of information: initial time of the allocation, the number of time slots allocated to the 1st communication unit, the accumulation of number of time slots allocated to the 1st and the 2nd communication units, ..., and the accumulation of number of time slots allocated to the 1st to the nth communication units.

According to another aspect of the invention, a time slot allocation method of a TDMA communication system is provided. The TDMA communication system comprises a plurality of communication units numbered from 1 to n (n $\geq$ 2) and a controller for allocating a number of time slots for communication to each of the communication units. The method comprises, at the level of the nth communication unit, the steps of: receiving from the controller a time slot allocation message comprising in sequence n+1 values; and setting its starting time of communication by adding the 1st value to the result of the nth value multiplied by the length of a time slot, and setting its time duration of communication by multiplying the length of a time slot by the result of subtracting the nth value from the (n+11)th value.

BRIEF DESCRIPTION OF DRAWINGS

These and other aspects, features and advantages of the present invention will become apparent from the following description in connection with the accompanying drawings in which:

    Figure 1 is an exemplary diagram showing the TDF super frame structure of an ADoC system;
    Figure 2 shows the time allocation method, at an access point side, according to an embodiment of the present invention;
    Figure 3 shows a time slot allocation table according to the embodiment of the present invention;
    Figure 4 shows the time allocation method, at a station side, according to the embodiment of the present invention;

DETAIL DESCRIPTION OF PREFERRED EMBODIMENTS

In the following description, various aspects of an embodiment of the present invention will be described. For purposes of explanation, specific configurations and details are set forth in order to provide a thorough understanding. However, it will also be apparent to one skilled in the art that the present invention may be practiced without the specific details present herein.

To provide a cost-effective bi-directional data transmission solution over the existing coaxial cable access network, a method has been proposed, which utilizes mature commodity WiFi chipsets with external frequency conversion circuit for frames delivery. The system which employs this method is referred to as ADoC (Asymmetric Data over Coaxial Cable) system, in which a TDF (Time Division Function) protocol is deployed to allow ADoC access point and stations to access the coaxial cable medium in a time-sharing mode, instead of a contention-based mode. The TDF protocol is based on TDMA, which allows multiple users to share the same channel by dividing it into a plurality of time slots. The stations transmit for uplink traffic, one after another, each using its own time slot in a TDF supper frame assigned by the access point. And for the download traffic, the stations share the channels and select the data or management frames by comparing the destination address information in the frames with their addresses. In this way, the user at home can access the remote IP core network via the cable access network. Normally a time slot allocation scheme is decided by the access point and informed to the associated stations.

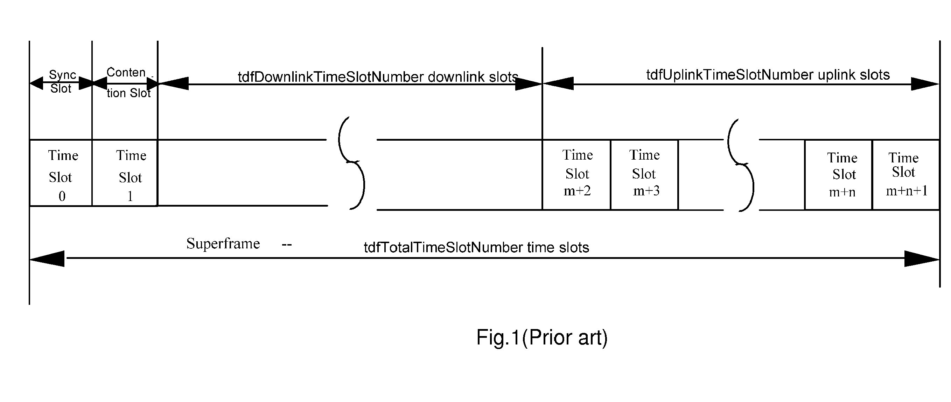

Figure 1 is an exemplary diagram showing the TDF superframe structure of an ADoC system. As shown in Figure 1, each TDF superframe has a certain number of timeslots, represented by tdf Total TimeSlotNumber, which can be classified, according to their functionalities, into the following types of:

(1) Synchronization time slot. Each TDF superframe comprises one synchronization time slot, represented in Figure 1 by Sync time slot, which is used to send clock synchronization information from TDF access point to TDF stations.

(2) Contention time slot. Each TDF superframe comprises one contention time slot which can be used to send Authentication and Registration request for uplink time slot allocation by TDF stations. Meanwhile, during the contention time slot, the STA which has sporadic uplink traffic to transmit but does not register with the TDF access point for uplink time slot allocation will send uplink traffic to TDF access point using the DCF (Distributed Coordination Function) mechanism. However, the maximum contention window CWmax for Authentication and Registration request frames will be smaller than minimum contention window CWmin for data frames to ensure the Authentication and Registration request frames have higher priorities than data frames sent during this time slot.

(3) Downlink time slots. These time slots are used by TDF access point to transmit data and management frames to the TDF stations. As shown in Figure 1, the number of downlink time slots contained in the superframe is represented by tdfDownlinkTimeSlotNumber.

(4) Time division uplink time slots. These time slots are used by the registered TDF stations to send data and management frames to TDF access point one after another. As shown in Figure 1, the number of uplink time slots contained in the superframe is represented by tdfUplinkTimeSlotNumber.

Thus, the relationship between tdfTotalTimeSlotNumber, tdfUplinkTimeSlotNumber and tdfDownlinkTimeSlotNumber satisfies the following equation:

$$\text{tdfTotalTimeSlotNumber} = \text{tdfUplinkTimeSlotNumber} + \text{tdfDownlinkTimeSlotNumber} + 2$$

The durations for the synchronization time slot, the contention time slot, time divisional uplink time slots and downlink time slots may be different from each other based on the requirements of practical access point application. However, every uplink or downlink time slot, which is named as common time slot, has the same duration represented by tdfCommonTimeSlotDuration.

The duration of one TDF superframe, defined as tdfSuperframeDuration, can be calculated by :

$$\text{tdfSuperframeDuration} = \text{tdfSyncTimeSlotDuration} + \text{tdfContentionTimeSlotDuration} + \text{tdfCommonTimeSlotDuration} * (\text{tdfTotalTimeSlotNumber} - 2)$$

wherein tdfSyncTimeSlotDuration and tdfContentionTimeSlotDuration represent the duration for the synchronization time slot and that for the contention time slot respectively.

The number of allocated uplink time slots for the TDF stations in a TDF superframe may change from 1 to a threshold represented by tdfMaximumUplinkTimeSlotNumber. Accordingly, the available downlink time slots in a TDF superframe may change from (tdfTotalTimeSlotNumber - 2) to (tdfTotalTimeSlotNumber - 2 - tdfMaximumUplinkTimeSlotNumber). Every time when there is one TDF station which asks for an uplink time slot, the TDF access point will deduce one or more time slots from the available downlink time slots, then allocate these time slots to the TDF station, as long as the uplink time slots number does not exceed tdfMaximumUplinkTimeSlotNumber. The value of tdfMaximumUplinkTimeSlotNumber may vary in different implementations. But it must be carefully chosen so that there is at least one downlink time slot available for an associated TDF station in order to guarantee the QoS of data service. Furthermore, all successive time slots that are used by the same TDF station or access point for the same direction of transmission can be merged to send MAC frames continuously to avoid the wastes at the edge of these time slots caused by the unnecessarily conversion and guarding.

In the implementation of ADoC system, the tdfCommonTimeSlotDuration is usually about 300 us, during which it is enough for the TDF station to transmit at least one largest 802.11 PPDU for 54M data rate mode. There are totally 62 time slots per TDF superframe, among which 20 are uplink time slots and 40 are downlink time slots. Suppose there are 20 stations in the system, each TDF station is guaranteed to access to 680kbps uplink data rate and shares 30Mbps (40 continuous time slots) downlink data rate. If there are 30 stations in the system, each will be guaranteed to access to 680kbps uplink data rate and shares 22.5Mbps (30 continuous time slots) downlink data rate. The tdfMaximumUplinkTimeSlotNumber is 30. Finally, the value of tdfSuperframeDuration, which includes the total duration of 61 common time slots and 1 Sync time slot, is about 18.6ms. Different values can be defined for this parameter depending on the context. For example, if there is only 1 TDF station, the station can be guarantee to access to about 18Mbps uplink data rate with 4 time slots and owns 18Mbps downlink data rate with 4 continuous time slots. In this case, the value of tdfSuperframeDuration, which is the total duration of 9 data timeslots and 1 Sync timeslot, is about 4ms.

In the ADoC system with TDF MAC layer protocol, typically a WiFi chipset operating in IEEE 802.11g mode with a frequency convertor is used. Normally, the IEEE 802.11g chipset supports data rate of up to 54 Mbit/s. It can also support several other data rates, such as 1 Mbit/s, 5.5Mbit/s, 11 Mbit/s, 24 Mbit/s and 48 Mbit/s. In most circumstances, the highest data rate, 54 Mbit/s, is used for the data transmission between an access point and a station due to good signal condition in cable network.

However, in practical deployment the channel condition between the access point and different stations may vary due to the different attenuations between the access point and each station. Some signal channels might not be good enough to support the 54 Mbit/s data rate. In view of the above, a method has been proposed that when sending MAC frames between one access point and different stations, the data rate (54M or lower) and the power to send the frames are adapted according to respective channel conditions which can be measured by some criteria such as packet loss. However, during the data rate switch between access point and stations, the bandwidth provided for the station must remain unchanged to be in line with the subscription agreement between the customer and the service operator. Therefore, a time slot reallocation mechanism for the stations is needed, in which the time slot number, typically uplink time slot number, of each STA can be dynamically and efficiently adjusted based on the varying data rate.

A time slot allocation method according to an embodiment of the present invention for ADoC system will be described in detail.

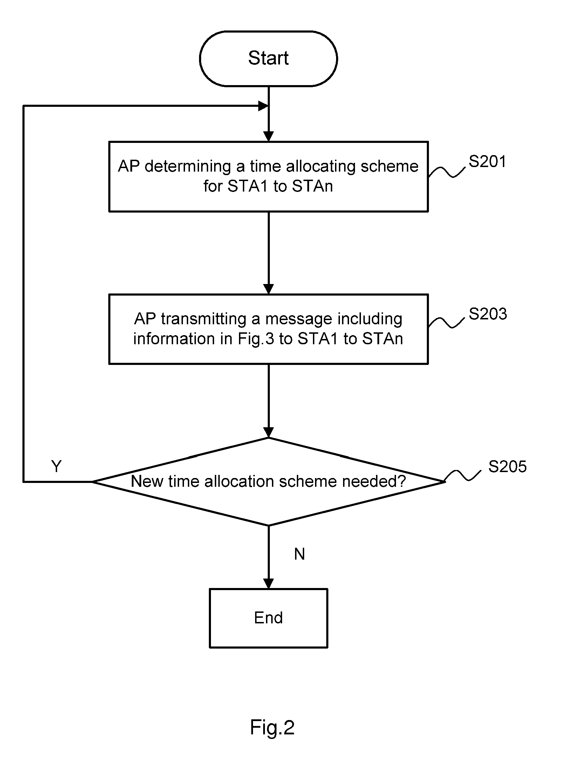

Figure 2 shows the time allocation method, at an access point side, according to an embodiment of the present invention.

As shown in Figure 2, in the first step S201, the access point generates a time allocation scheme for all stations STA 1 to STA n associated with it. That is, the access point will determine in this step the starting time and duration of each station. For example, in this embodiment, the access point determines the time slot allocation scheme according to the uplink bandwidth and data rate of respective stations, wherein the uplink bandwidth of each station can be determined by its subscription agreement and the data rate can be informed to the access point by each station.

As described above, the time allocation can be implemented by assigning the number of equal-length time slots to each of the associated stations for uplink communication. The number of uplink time slots of each station is calculated by dividing the uplink bandwidth with the throughput supported by one time slot in the data rate.

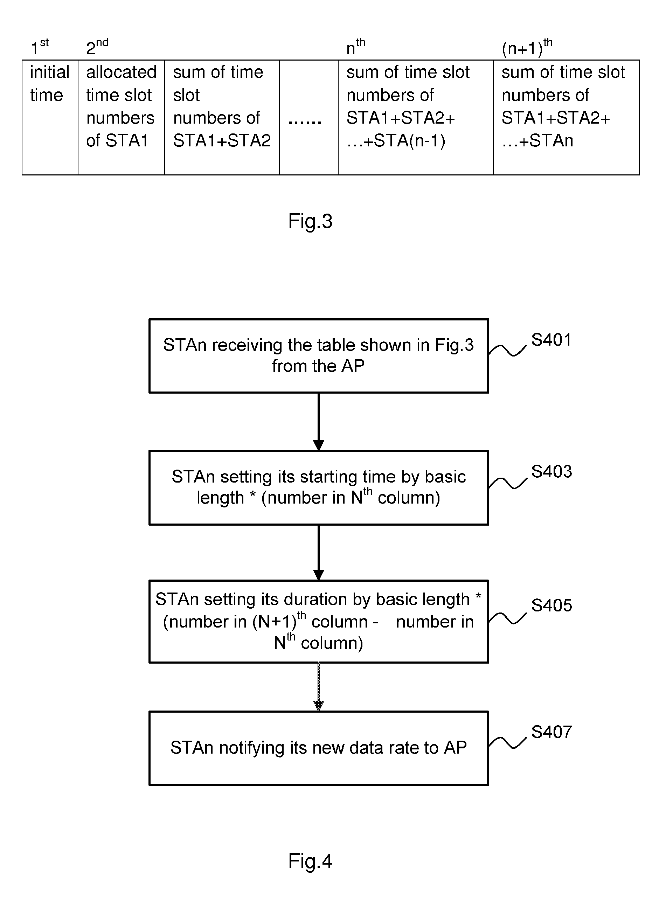

Next, the method goes to the step S203, in which the access point broadcasts a time slot allocation message, including the above-mentioned allocated numbers of time slots of the stations, to all associated stations STA 1 to STA n. The time slot allocation message includes the initial time of the time slot allocation, allocated time slot number of STA1, sum of time slot number of STA1 and STA2, sum of time slot number of STA1 to STA3, ..., and sum of time slot number from STA1 to STA n. The time slot allocation message can be organised in a table as shown in Figure 3. As shown in Figure 3, for an N-station system, the table has N+1 columns for storing the time slot allocation message in the above-described order.

The time slot allocation message can be carried in a management frame such as a synchronization frame during every superframe period to notify the stations.

Next, the method goes to the step S205, in which the access point determines whether a time slot reallocation is needed. For example, the access point receives from stations STA 1 to STA n information on the actual data rate of each station. In this embodiment, upon detection of a change of the data rate of any stations, the access point will determine that a time slot reallocation is needed. Then the method goes back to step S201 in which a new time slot allocation scheme is determined.

Figure 4 shows the time allocation method, at a station side (the STA n in this case), according to the embodiment of the present invention. When a station, for example the STA n, receives in a step S401 the time slot allocation message (the table in Figure 3 in the case) from the access point, it can obtain the time slots assigned to it from the table shown in Figure 3 with an efficient computation process.

The STA n can easily obtain its allocated starting time and duration from the table organized according to the embodiment of the present invention. Specifically, in a step S403, the STA n can get and set the starting time of its time slot allocation by multiplication of the common length of one time slot which is known to all the stations with the time slot number indicated in the N column of the table. That is, the starting time could be calculated by the expression of Basiclength * (number in Nth column), wherein Basiclength represents the common length of one time slot.

Similarly, the STA n can easily get and set its time slot duration by calculation according to the expression of Basiclength * (number in (N+1)th column - number in Nth column)), as shown in the step S405.

It should be noted that in this embodiment the starting time of the time slot allocation is set as "0". When the starting time is required to be set not equal to "0", a person skilled in the art can appreciate that the STA n can also get its starting time according to the concept describe above with adding the initial time in the first column of the table to the value calculated by the expression of Basiclength * (number in Nth column).

When the STA n switches to another data rate other than the maximal data rate, the method goes to step 407 in which the STA n will notify the access point its new data rate, for example, via a dedicated management or control frame, or by setting a dedicated flag in a MAC frame to the access point.

In this embodiment, the STA n is taken as an example to illustrate the process of the stations. It can be understood that such a process can be carried out respectively by the STA 1 to STA n.

As described in Figure 2, upon reception of the changed data rates informed by the stations, the access point can determine a new time slot allocation scheme to satisfy the required bandwidth, and then update the data in the time slot allocation table. Next, the access point sends the updated time slot allocation table with the synchronization frame to all the associated stations during the next superframe.

It can be appreciated by a person skilled in the art that then all the associated stations can adjust their uplink time allocation after receiving the updated time slot allocation table with the manner described above.

Generally, the access point supposes by default that a station will use the maximal data rate to associate with it for communication. In this case, the access point will set the number of uplink time slots for this station at the maximal data rate, represented by BasicSlotNumber, by dividing the uplink bandwidth, represented by Bandwidth, with the throughput supported by one time slot in the maximal data rate mode. In view of the above, the calculation for the time slot reallocation can be made by the access point based on this BasicSlotNumber. Specifically, when the access point receives the updated data rate from a station, represented by OtherRate, then it can simply get the updated uplink time slot number for this station in the new data rate mode to satisfy the required bandwidth by the equation of ((MaxRate/OtherRate) * BasicSlotNumber).

The present invention provides a time slot allocation method in TDMA communication system. With this invention, time slots are allocated to communication units in a more efficient manner.

While the embodiments are presented in the context of the ADoC network with TDF, those skilled in the art will recognize that the principles of the invention are applicable to other TDMA communication systems. It is to be understood that numerous modifications may be made to the illustrative embodiments and that other arrangements may be devised without departing from the spirit and scope of the present invention as defined by the access appended claims.

**Claims**

1. A time slot allocation method of a TDMA communication system comprising a plurality of communication units numbered from 1 to n ($n \geq 2$) and a controller for allocating a number of time slots for communication to each of the communication units, **characterized in that,** the method comprises, at the level of the controller, the steps of:

    transmitting a time slot allocation message to the plurality of communication units, the message comprising in sequence the following n+1 items of information: initial time of the allocation, the number of time slots allocated to the 1st communication unit, the accumulation of number of time slots allocated to the 1st and the 2nd communication units, ..., and the accumulation of number of time slots allocated to the 1st to the nth communication units.

2. The method according to claim 1, wherein the message is in the form of a table in which each item of information is arranged orderly in a corresponding column.

3. The method according to claim 1 or 2, wherein the message is carried by a management frame.

4. The method according to claim 3, wherein the management frame is a synchronization frame.

5. The method according to any one of claims 1-4, wherein the controller is an access point and the communication units are stations.

6. The method according to claim 5, wherein the message is for uplink time slot allocation.

7. The method according to any one of claims 1-6, wherein the number of time slots assigned to each communication unit is based on its data rate of communication.

8. A time slot allocation method of a TDMA communication system comprising a plurality of communication units numbered from 1 to n (n ≥ 2) and a controller for allocating a number of time slots for communication to each of the communication units, **characterized in that,** the method comprises, at the level of the $n^{th}$ communication unit, the steps of:

receiving from the controller a time slot allocation message comprising in sequence n+1 values; and
setting its starting time of communication by adding the $1^{st}$ value to the result of the $n^{th}$ value multiplied by the length of a time slot, and setting its time duration of communication by multiplying the length of a time slot by the result of subtracting the $n^{th}$ value from the $(n+11)^{th}$ value.

9. The method according to claim 8, wherein the $n^{th}$ communication unit informs its communication data rate to the controller for time slot reallocation.

Fig.1(Prior art)

```
                    ┌─────────────┐
                    │    Start    │
                    └─────────────┘
                           │
   ┌───────────────────────┼──────────────────────────┐
   │                       ▼                           │
   │    ┌──────────────────────────────────┐          S201
   │    │  AP determining a time allocating │
   │    │        scheme for STA1 to STAn    │
   │    └──────────────────────────────────┘
   │                       │
   │                       ▼
   │    ┌──────────────────────────────────┐          S203
   │    │  AP transmitting a message        │
   │    │  including information in Fig.3   │
   │    │  to STA1 to STAn                  │
   │    └──────────────────────────────────┘
   │                       │
   │                       ▼
   │  Y      ◇─────────────────────────────◇          S205
   └─────────  New time allocation scheme needed?
            ◇─────────────────────────────◇
                          │
                          │ N
                          ▼
                    ┌─────────────┐
                    │     End     │
                    └─────────────┘
```

Fig.2

| 1st | 2nd | | | nth | (n+1)th |
|---|---|---|---|---|---|
| initial time | allocated time slot numbers of STA1 | sum of time slot numbers of STA1+STA2 | ...... | sum of time slot numbers of STA1+STA2+ ...+STA(n-1) | sum of time slot numbers of STA1+STA2+ ...+STAn |

Fig.3

```
┌──────────────────────────────────────┐
│  STAn receiving the table shown in    │   ⌇ S401
│  Fig.3 from the AP                     │
└──────────────────────────────────────┘
                  │
                  ▼
┌──────────────────────────────────────┐
│  STAn setting its starting time by    │   ⌇ S403
│  basic length * (number in Nth        │
│  column)                              │
└──────────────────────────────────────┘
                  │
                  ▼
┌──────────────────────────────────────┐
│  STAn setting its duration by basic   │   ⌇ S405
│  length * (number in (N+1)th column   │
│  -  number in Nth column)             │
└──────────────────────────────────────┘
                  │
                  ▼
┌──────────────────────────────────────┐
│  STAn notifying its new data rate     │   ⌇ S407
│  to AP                                │
└──────────────────────────────────────┘
```

Fig.4

Europäisches
Patentamt

European
Patent Office

Office européen
des brevets

# EUROPEAN SEARCH REPORT

Application Number

EP 09 30 5499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 477 621 B1 (LOC PETER [US] ET AL) 13 January 2009 (2009-01-13) <br> * column 12, line 15 - column 17, line 43 * <br> * figures 1A,2B * | 1-9 | INV. H04W72/04 <br><br> ADD. H04W74/04 |
| X | US 2004/264428 A1 (CHOI HYONG-UK [KR] ET AL) 30 December 2004 (2004-12-30) <br> * paragraph [0016] - paragraph [0021] * <br> * paragraph [0045] - paragraph [0048] * <br> * figures 2,3,5 * | 1-9 | |
| A | WO 2009/026747 A (THOMSON LICENSING [FR]; YU JINFEI [CN]; ZHANG ZHIGANG [CN]; ZHANG JUNB) 5 March 2009 (2009-03-05) <br> * page 7, line 26 - page 19, line 17 * <br> * figure 5 * | 1-9 | |
| | | | TECHNICAL FIELDS SEARCHED (IPC) <br><br> H04W |

The present search report has been drawn up for all claims

| Place of search | Date of completion of the search | Examiner |
|---|---|---|
| Munich | 4 November 2009 | Schorgg, Alfred |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 30 5499

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2009

| Patent document cited in search report | | Publication date | Patent family member(s) | | Publication date |
|---|---|---|---|---|---|
| US 7477621 | B1 | 13-01-2009 | NONE | | |
| US 2004264428 | A1 | 30-12-2004 | CN | 1578242 A | 09-02-2005 |
| | | | KR | 20050003575 A | 12-01-2005 |
| WO 2009026747 | A | 05-03-2009 | NONE | | |

EPO FORM P0459

For more details about this annex : see Official Journal of the European Patent Office, No. 12/82